# FASCICULE DE BREVET EUROPEEN

(11) **EP 1 807 648 B1**
(45) Date de publication et mention de la délivrance du brevet: **06.07.2011**
(21) Numéro de dépôt: 05809604.1
(22) Date de dépôt: 11.10.2005
(51) Int. Cl.: F16L 37/092

(54) **JONC DE VERROUILLAGE SEGMENTE, ASSEMBLAGE ET PROCEDE DE MONTAGE CORRESPONDANTS**
SEGMENTIERTER KLEMMRING UND ENTSPRECHENDE ANORDNUNG UND BEFESTIGUNGSVERFAHREN
SEGMENTED LOCKING RING, AND CORRESPONDING ASSEMBLY AND MOUNTING METHOD

(30) Priorité: 22.10.2004 FR 0411304
(43) Date de publication de la demande: 18.07.2007
(73) Titulaire: Saint-Gobain PAM, 54000 Nancy (FR)
(72) Inventeur: SCHMUCK, Jean-François, F-54210 TONNOY (FR); FORFERT, Michel, F-57590 DELME (FR); PERCEBOIS, Alain, F-54700 BLENOD LES PONT-A-MOUSSON (FR); GENELOT, Pierre, F-54700 NORROY (FR)
(74) Mandataire: Domenego, Bertrand
(86) Numéro de dépôt international: PCT/FR2005/002518
(87) Numéro de publication internationale: WO 2006/045915

(56) Documents cités:
- EP-A- 1 013 980
- WO-A-97/03314
- US-A- 3 398 977
- US-A- 4 685 708

## Description

La présente invention concerne un anneau de verrouillage adapté pour verrouiller une jonction entre deux éléments tubulaires, du type s'étendant autour d'un axe central et comprenant au moins deux segments rigides ayant chacun une partie courante et deux extrémités circonférentielles, chaque segment ayant une forme s'évasant d'un côté axial mince vers un côté axial épais.

Elle s'applique notamment à l'assemblage verrouillé de tuyaux en fonte ayant un diamètre nominal supérieur à 500 millimètres.

On connaît du document US-4,685,708 un anneau de verrouillage de ce type. Cet anneau est maintenu sur un bout à emboîtement au moyen d'une agrafe qui est introduite entre les extrémités de deux segments adjacents. La manipulation de cet anneau est compliquée et le montage est de ce fait coûteux.

Un autre type d'anneau de verrouillage est connu du document EP-A-690-257. Ce document décrit un anneau de verrouillage fendu muni, dans sa partie dirigée vers l'entrée du bout à emboîtement, d'un évidement étagé faisant tout le tour de l'anneau.

Afin de faciliter le montage, ce document prévoit un anneau de maintien, qui s'étend dans l'évidement étagé avant et lors du montage du bout uni.

L'anneau de verrouillage de ce document ne comprend qu'un seul segment et n'est pas adapté à une liaison de tuyaux de grand diamètre.

L'invention a pour but de pallier les inconvénients cités, et de proposer un anneau de verrouillage qui permette une manipulation simple, facilite l'introduction du bout uni dans le bout à emboîtement et qui, au final, assure un verrouillage efficace de la jonction entre le bout uni et le bout à emboîtement, notamment lorsque les tuyaux présentent de grands diamètres.

A cet effet, l'invention a pour objet un anneau de verrouillage du type précité, caractérisé en ce qu'au moins l'un des segments comprend au moins un évidement de réception d'un organe de maintien, en ce que l'évidement de réception est axialement ouvert du côté mince, en ce que l'évidement de réception s'étend exclusivement dans la partie courante, et en ce que l'évidement de réception est circonférentiellement limité des deux côtés.

Selon des modes particuliers de réalisation de l'invention, l'anneau de verrouillage comporte l'une ou plusieurs des caractéristiques suivantes.
- l'évidement de réception est radialement ouvert vers l'intérieur de l'axe central ;
   - l'évidement de réception s'étend sur toute la longueur axiale du segment de telle sorte qu'il est axialement ouvert des deux côtés ;
   - l'évidement de réception est circonférentiellement centré par rapport aux deux extrémités du segment, notamment lorsque ce segment comporte un seul évidement ;
   - l'anneau comprend des éléments de liaison élastiques reliant chacun les deux extrémités de deux segments adjacents ;
   - chaque segment qui est relié à un autre segment par un élément de liaison comprend des logements pour les éléments de liaison, ces logements étant ouverts circonférentiellement et radialement vers l'intérieur ; et
   - l'anneau comprend, du côté mince, un chanfrein radialement intérieur s'évasant axialement vers l'extérieur.

L'invention a en outre pour objet un assemblage tubulaire, du type comprenant :
- un bout à emboîtement muni d'une gorge de logement d'un anneau de verrouillage, et
- un anneau de verrouillage adapté pour verrouiller un bout uni dans le bout à emboîtement,
caractérisé en ce que l'anneau de verrouillage est un anneau tel que défini ci-dessus, et en ce que l'assemblage comprend au moins un organe de maintien d'un segment sur le bout à emboîtement à l'encontre d'un déplacement radialement vers l'intérieur, l'organe de maintien étant accroché au bout à emboîtement et s'étendant dans l'évidement de réception.

Selon des modes particuliers de réalisation, l'assemblage tubulaire comporte l'une ou plusieurs des caractéristiques suivantes :
- l'organe de maintien comprend une branche s'étendant dans l'évidement de réception sur toute la longueur axiale de celui-ci ; et
   - l'assemblage comprend en outre un bout uni inséré dans le bout à emboîtement, le verrouillage du bout uni dans le bout à emboîtement s'effectuant par l'intermédiaire de l'anneau de verrouillage.

Enfin, l'invention a pour objet un procédé de montage d'un assemblage tel que décrit ci-dessus, caractérisé par les étapes successives suivantes :
a) introduction de l'anneau de verrouillage dans la gorge du bout à emboîtement et mise en pré expansion de l'anneau par l'intermédiaire des organes de maintien ;
b) enfilement du bout uni dans le bout à emboîtement et écartement radial de l'anneau de verrouillage lors du passage du bout uni ;
c) retrait du ou des organe(s) de maintien induisant un resserrage de l'anneau de verrouillage autour du bout uni ;
d) poursuite de l'enfilement du bout uni, lorsque celui-ci comporte un bourrelet de blocage, jusqu'à franchissement par ce bourrelet de l'anneau de verrouillage ; et
e) recul du bout uni jusqu'à l'amener en position verrouillée, position dans laquelle l'anneau s'applique contre une surface de verrouillage du bout à emboîtement.

L'invention sera mieux comprise à la lecture de la description qui va suivre, donnée uniquement à titre d'exemple et faite en se référant aux dessins annexés, sur lesquels :
- les figures 1 à 5 sont des vues en coupe méridienne partielle d'un assemblage tubulaire selon l'invention, pendant différentes étapes de montage ;
- la figure 6 est une vue en perspective d'une cale de maintien selon l'invention ;
- la figure 7 est une vue en perspective de deux segments d'un anneau de verrouillage selon l'invention ; et
- la figure 8 est une vue en perspective d'un segment d'un anneau de verrouillage selon une variante de l'invention.

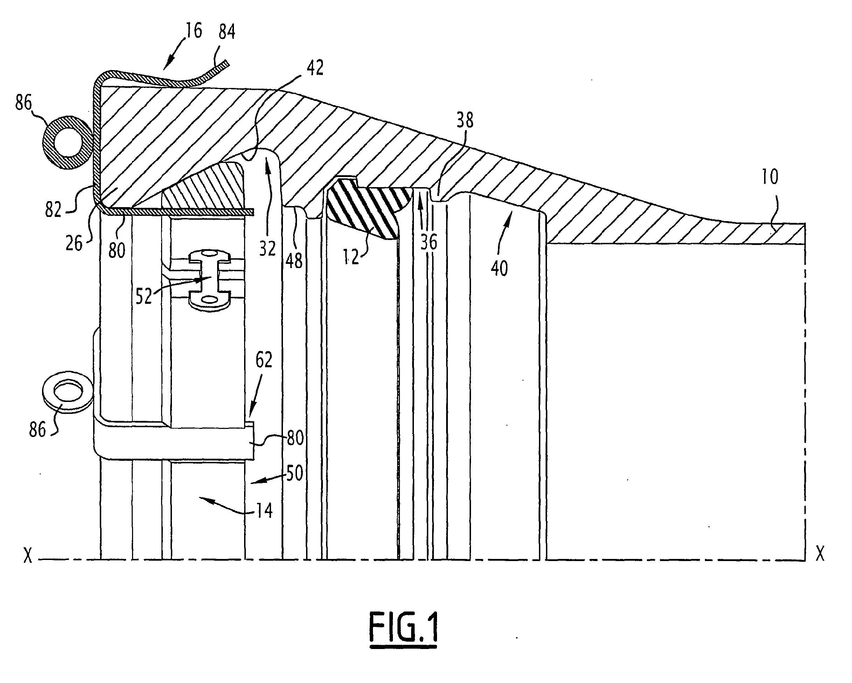

Sur les figures 1 à 5 est représenté un assemblage tubulaire selon l'invention, désigné par la référence générale 2.

L'assemblage tubulaire 2 s'étend suivant un axe central X-X. Dans ce qui suit, les expressions « radialement », « circonférentiellement », « axialement » seront utilisées par rapport à cet axe X-X.

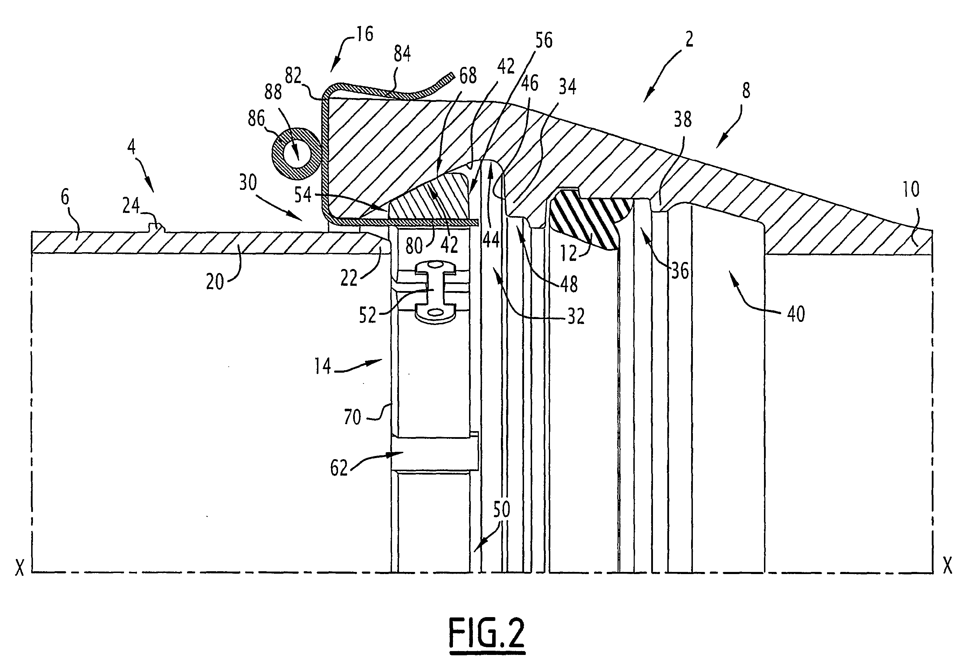

Comme illustré sur la Figure 2, l'assemblage 2 comprend un bout uni 4 ou bout mâle, solidaire d'un premier tuyau 6, un bout à emboîtement 8 ou bout femelle, solidaire d'un second tuyau 10, une garniture d'étanchéité 12 en matière élastique, un anneau de verrouillage 14 ainsi qu'une pluralité de cales de maintien 16.

Le bout uni 4 comporte une paroi cylindrique 20 munie à son extrémité d'un chanfrein extérieur 22 ainsi qu'un bourrelet de blocage 24 réalisé de préférence sous la forme d'un cordon de soudure périphérique extérieur.

Le bout à emboîtement 8 comprend une collerette d'entrée 26 délimitant une ouverture 30 d'introduction du bout uni 4, puis successivement, de l'arrière vers l'avant en allant de la collerette d'entrée 26 vers le fond de l'emboîtement, une gorge 32 de logement de l'anneau de verrouillage 14, une saillie intérieure 34 limitant axialement cette gorge 32, une chambre 36 de réception de la garniture d'étanchéité 12, une nervure 38 limitant axialement cette chambre 36, et une cavité 40 de réception de l'extrémité du bout uni 4.

La gorge de logement 32 comprend une surface de verrouillage 42 sensiblement tronconique se rétrécissant vers l'entrée de l'emboîtement, ainsi qu'une surface annulaire de fond 46, à peu près radiale, qui se raccorde à la surface de verrouillage 42 par un arrondi 44.

La saillie intérieure 34 est munie d'un évidement de réception 48 qui est ouvert radialement vers l'intérieur et axialement vers l'entrée de l'emboîtement, et qui est adapté pour de recevoir le bourrelet de blocage 24 lors de la mise en place du bout uni 4 dans le bout à emboîtement 8.

La chambre de réception 36, la nervure 38, la cavité de réception 40 ainsi que la garniture d'étanchéité 12 sont des éléments connus et ne seront pas décrits en détail ci-après.

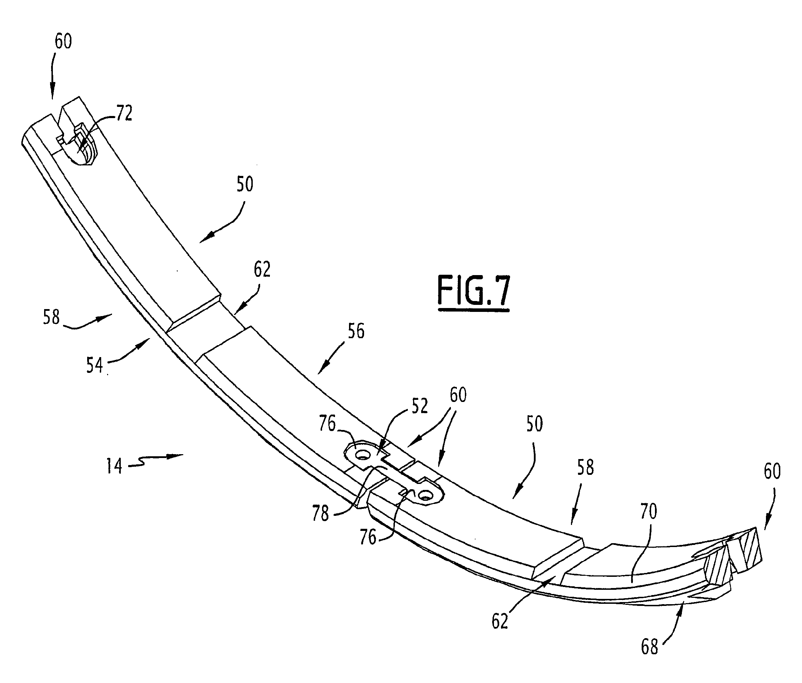

L'anneau de verrouillage 14 comprend une pluralité de segments rigides 50, par exemple métalliques, dont deux sont représentés à la figure 7. Ces segments sont reliés entre eux par des éléments de liaison 52 souples, de manière à former un anneau continu élastiquement déformable.

L'anneau 14 comprend un côté axial radialement mince 54 et un côté axial radialement épais 56, le côté mince 54 étant tourné vers l'entrée de l'emboîtement à l'état monté (voir Figure 2).

Chaque segment 50 comporte une partie courante 58 ainsi que deux extrémités circonférentielles 60.

Par ailleurs, chaque segment 50 comprend intérieurement un seul évidement de réception 62 destiné à coopérer avec une cale de maintien 16.

Chaque évidement de réception 62 est axialement ouvert du côté mince 54 et du côté épais 56, de telle sorte que l'évidement 62 s'étend sur toute la longueur axiale du segment 50. Par ailleurs, les évidements 62 sont radialement ouverts vers l'intérieur.

Chaque segment 50 comprend en outre une surface radialement extérieure 68 sensiblement en forme de segment de tronc de cône se rétrécissant vers le côté mince 54, ainsi que, du côté mince 54, un chanfrein intérieur 70 s'évasant axialement vers l'extérieur.

Une encoche de réception 72 traverse radialement chacune des extrémités circonférentielles 60 de chaque segment 50, et est circonférentiellement ouverte vers l'extrémité respective 60 du segment adjacent.

L'élément de liaison 52 est fabriqué en matière élastique, par exemple en caoutchouc, et comprend deux têtes axialement élargies 76 reliées par une entretoise mince 78. Les têtes élargies 76 s'étendent chacune, par complémentarité de forme, dans une encoche de réception 72 de deux segments 50 adjacents, chaque élément 52 reliant ainsi deux segments 50 adjacents.

L'évidement de réception 62 est de préférence circonférentiellement centré par rapport aux deux extrémités 60 du segment.

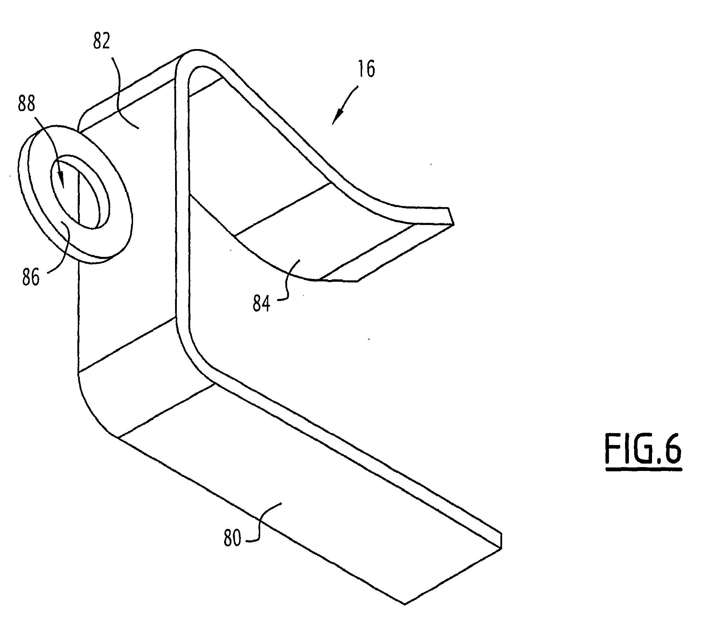

Comme on le voit sur la Figure 6, la cale de maintien 16 a une forme sensiblement en C comprenant une branche intérieure 80, droite, une âme 82 et une branche extérieure 84, courbe. Chaque cale de maintien 16 comprend en outre une poignée 86, fixée à l'âme 82 et munie d'un orifice 88. Les cales 16 sont réalisées en un matériau rigide et de préférence en métal.

Comme illustré sur la Figure 2, les cales de maintien 16 sont fixées sur la collerette d'entrée 26 de l'emboîtement et sont adaptées pour maintenir l'anneau de verrouillage 14 dans une position pré expansée dans laquelle son diamètre intérieur est suffisamment grand pour ne pas entraver l'introduction du bout uni 4.

La branche intérieure 80 a une longueur axiale suffisante pour qu'elle s'étende sur toute la longueur axiale de l'évidement 62.

Le montage de l'assemblage selon l'invention est effectué de la manière suivante.

Initialement, tel que représenté sur la figure 1, l'anneau de verrouillage 14 se trouve dans la gorge 32. L'anneau 14 est maintenu par les cales 16 et ne peut pas se déplacer radialement vers l'intérieur, les cales s'appuyant par ailleurs par leur branche courbe 84 sur la surface extérieure de la collerette d'entrée de l'emboîtement et par leur âme 82 contre la face frontale de cette collerette. Dans cette configuration, les cales 16 pré expansent l'anneau de verrouillage 14 par mise en prétension des éléments de liaison 52 élastiques, et assurent ainsi un positionnement optimal de l'anneau 14 dans la gorge 32 en vue de l'insertion du bout uni 4. Les cales 16 permettent aussi de maintenir l'anneau 14 en place dans la gorge 32 en empêchent notamment celui-ci de s'effondrer, ce qui entraverait par la suite l'insertion du bout uni 4.

Ensuite, le bout uni 4 peut être introduit dans l'ouverture 30 (voir figure 2).

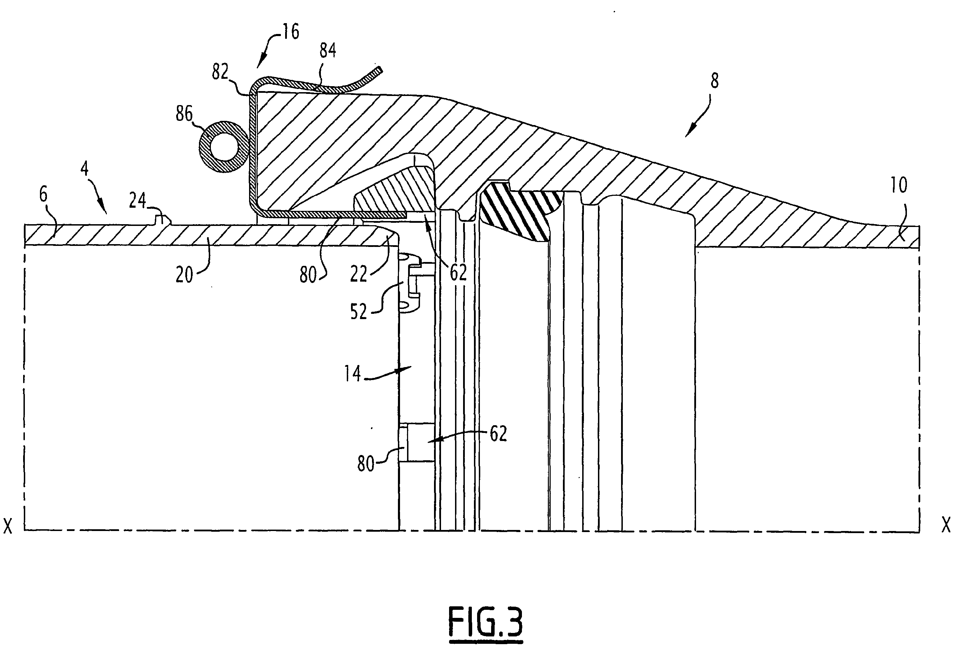

Lors de la poursuite de l'introduction, le chanfrein 22 du bout uni 4 s'applique contre le chanfrein 70 des segments 50, écartant ainsi l'anneau de verrouillage 14 radialement tout en poussant celui-ci axialement vers l'avant contre la surface de fond 46 de la gorge 32, comme ceci est représenté sur la figure 3. La branche intérieure 80 de chaque cale est suffisamment longue pour s'étendre au moins partiellement dans l'évidement 62 dans cette configuration.

Ensuite, les cales 16 sont retirées axialement du bout à emboîtement 8 et les segments 50 s'appliquent alors élastiquement contre la paroi cylindrique 20 du bout uni 4 sous l'effort des éléments de liaison 52 souples.

Avantageusement, les orifices 88 des poignées 86 peuvent recevoir un câble circonférentiel non représenté reliant au moins deux poignées 86 et permettant d'arracher les cales 16 de ces poignées 86 en une seule opération, au lieu de les retirer séparément.

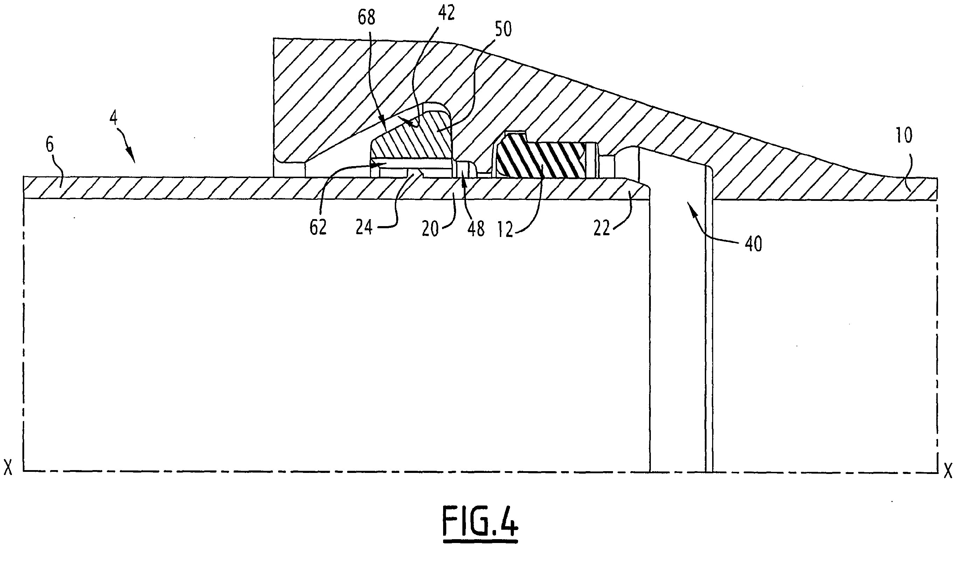

Puis l'enfoncement du bout uni 4 est poursuivi jusqu'à ce que le bourrelet de blocage 24 s'applique contre le chanfrein 70 et écarte radialement les segments 50 (voir figure 4).

Lorsque le bourrelet de blocage 24 se trouve dans l'évidement 48 de la saillie intérieure 34, les segments 50 sont radialement resserrés sous l'effort des éléments de liaison 52, et l'anneau de verrouillage est alors positionné derrière le bourrelet de blocage 24.

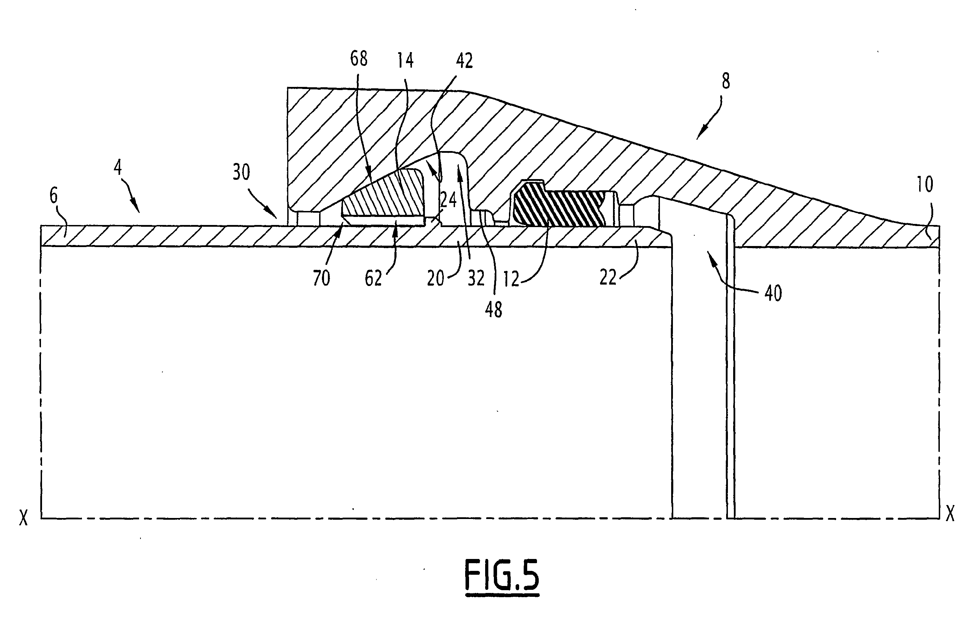

Finalement, le bout uni 4 est légèrement ramené vers l'arrière, ce qui déplace l'anneau de verrouillage 14 axialement jusqu'à atteindre la position de verrouillage représentée sur la Figure 5. Dans cette position, le bourrelet de blocage 24 est en appui contre l'anneau de verrouillage 14 et la surface tronconique 68 de l'anneau 14 s'applique contre la surface de verrouillage 42 de la gorge 32, empêchant ainsi le bout uni 4 de se séparer du bout à emboîtement 8.

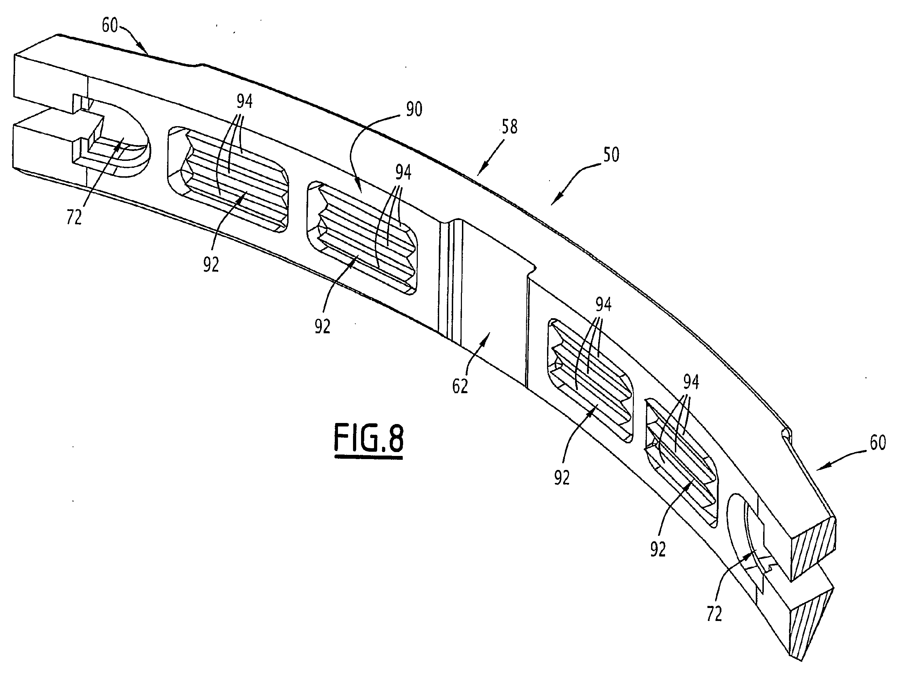

Sur la figure 8 est représentée une variante d'un segment 50.

Dans ce qui suit, uniquement les différences par rapport aux segments 50 précédemment décrits seront exposées. Les éléments analogues portent les mêmes références.

Ce segment 50 comporte, sur une surface radialement intérieure 90, des inserts de verrouillage 92, fabriqués en matériau dur, tel que du métal trempé ou de la céramique. Ces inserts 92 comportent des dents 94 qui font saillies radialement de la surface 90 et qui sont adaptées pour s'appliquer contre la surface extérieure de la paroi 20 du bout uni 4.

Un anneau de verrouillage 14 qui est muni d'un tel segment 50 est avantageusement adapté pour verrouiller un bout uni 4 qui est dépourvu d'un bourrelet de blocage 24.

Un autre avantage est que la surface intérieure 90 sert de limitateur de pénétration des dents 94 dans le bout uni 4 et offre une grande surface portante par rapport à des inserts connus.

Les inserts 92 peuvent être fixés au reste du segment 50 par collage, vissage ou tout autre moyen dans des logements prévus à cet effet. En variante, les dents 94 sont venues de matière avec le reste du segment 50.

Le montage de cet anneau s'effectue alors de la manière suivante : l'anneau est d'abord pré expansé grâce aux cales 16 puis est écarté par le passage du bout uni 4, ceci par étirement des éléments élastiques, puis se plaque sur le bout uni lorsque les cales sont retirées.

L'anneau de verrouillage selon l'invention est particulièrement adapté au verrouillage de tuyaux de grand diamètre, par exemple de tuyaux ayant un diamètre nominal supérieur à 500 mm. Un anneau pour un tuyau ayant un diamètre nominal de 1200 mm comporte par exemple dix segments 50.

Le chanfrein 70 de l'anneau segmenté 14, disposé sur sa partie orientée vers l'entrée de l'emboîtement, facilite le passage du bout uni 4 et l'écartement de l'anneau.

Les évidements 62 permettent avantageusement le logement des cales 16 sous l'anneau. En outre, ces évidements 62 permettent d'avoir des cales à branche droite, réutilisables d'un montage à l'autre.

## Revendications

1. Assemblage tubulaire, du type comprenant :
- un bout à emboîtement (8) muni d'une gorge (32) de logement d'un anneau de verrouillage (14), et
- un anneau de verrouillage (14) adapté pour verrouiller un bout uni (4) dans le bout à emboîtement (8),
l'anneau de verrouillage étant adapté pour verrouiller une jonction entre deux éléments tubulaires (4, 8), du type s'étendant autour d'un axe central (X-X) **caractérisé en ce que** l'anneau de verrouillage comprend au moins deux segments (50) rigides ayant chacun une partie courante (58) et deux extrémités circonférentielles (60), chaque segment (50) ayant une forme s'évasant d'un côté axial mince (54) vers un côté axial épais (56),
**en ce qu'**au moins l'un des segments (50) comprend au moins un évidement de réception (62) d'un organe de maintien (16), **en ce que** l'évidement de réception (62) est axialement ouvert du côté mince, **en ce que** l'évidement de réception (62) s'étend exclusivement dans la partie courante (58), **en ce que** l'évidement de réception (62) est circonférentiellement limité des deux côtés, et **en ce que** l'assemblage comprend au moins un organe de maintien (16) d'un segment (50) sur le bout à emboîtement (8) à l'encontre d'un déplacement radialement vers l'intérieur, l'organe de maintien (16) étant accroché au bout à emboîtement (8) et s'étendant dans l'évidement de réception (62).

2. Assemblage selon la revendication 1, **caractérisé en ce que** l'évidement de réception (62) est radialement ouvert vers l'intérieur de l'axe central (X-X).

3. Assemblage selon la revendication 1 ou 2, **caractérisé en ce que** l'évidement de réception (62) s'étend sur toute la longueur axiale du segment (50) de telle sorte qu'il est axialement ouvert des deux côtés.

4. Assemblage selon l'une quelconque des revendications 1 à 3, **caractérisé en ce que** l'évidement de réception (62) est circonférentiellement centré par rapport aux deux extrémités (60) du segment (50), notamment lorsque ce segment ne comporte qu'un seul évidement de réception (62).

5. Assemblage selon l'une quelconque des revendications 1 à 4, **caractérisé en ce qu'**il comprend des éléments de liaison (52) élastiques reliant chacun les deux extrémités (60) de deux segments (50) adjacents.

6. Assemblage selon la revendication 5, **caractérisé en ce que** chaque segment (50) qui est relié à un autre segment par un élément de liaison (52) comprend des logements (72) pour les éléments de liaison (52), ces logements (72) étant ouverts circonférentiellement et radialement vers l'intérieur

7. Assemblage selon l'une quelconque des revendications 1 à 6, **caractérisé en ce qu'**il comprend, du côté mince, un chanfrein (70) radialement intérieur s'évasant axialement vers l'extérieur.

8. Assemblage selon l'une quelconque des revendications précédentes, **caractérisé en ce que** l'organe de maintien (16) comprend une branche (80) s'étendant dans l'évidement de réception (62) sur toute la longueur axiale de celui-ci.

9. Assemblage selon l'une quelconque des revendications précédentes, **caractérisée en ce qu'**il comprend en outre un bout uni (4) inséré dans le bout à emboîtement (8), le verrouillage du bout uni (4) dans le bout à emboîtement (8) s'effectuant par l'intermédiaire de l'anneau de verrouillage (14).

10. Procédé de montage d'un assemblage selon la revendication 9, **caractérisé par** les étapes successives suivantes :
a) introduction de l'anneau de verrouillage (14) dans la gorge (32) du bout à emboîtement (8) et pré expansion de l'anneau de verrouillage (14) par l'intermédiaire du ou des organe(s) de maintien (16) ;
b) enfilement du bout uni (4) dans le bout à emboîtement (8) et écartement radial de l'anneau de verrouillage (14) lors du passage du bout uni ;
c) retrait du ou des organe(s) de maintien (16) induisant un resserrage de l'anneau de verrouillage (14) autour du bout uni ;
d) poursuite de l'enfilement du bout uni (4), lorsque celui-ci comporte un bourrelet de blocage (24), jusqu'à tranchissement par ce bourrelet (24) de l'anneau de verrouillage (14) ; et
e) recul du bout uni (4) jusqu'à l'amener en position verrouillée, position dans laquelle l'anneau (14) s'applique contre une surface de verrouillage (42) du bout à emboîtement (8).

## Claims

1. Tubular assembly, of the type comprising:
- a bell end (8) provided with a channel (32) for accommodating a locking ring (14), and
- a locking ring (14) designed to lock a spigot end (4) in the bell end (8),
the locking ring being designed to lock a joint between two tubular elements (4, 8) of the type extending around a central axis (X-X), **characterised in that** the locking ring comprises at least two rigid segments (50), each with a main part (58) and two circumferential ends (60), each segment (50) being of a shape which is flared from a thin axial end (54) to a thick axial end (56),
**in that** at least one of the segments (50) has at least one receiving recess (62) for a retaining element (16), the receiving recess (62) is axially open at the thin end, the receiving recess (62) extends exclusively through the main part (58), the receiving recess (62) is circumferentially limited by the two ends, and the assembly has at least one retaining element (16) for a segment (50) on the bell end (8) to prevent any movement radially towards the interior, the retaining element (16) being hooked onto the bell end (8) and extending through the receiving recess (62).

2. Assembly as claimed in claim 1, **characterised in that** the receiving recess (62) is radially open towards the interior of the central axis (X-X).

3. Assembly as claimed in claim 1 or 2, **characterised in that** the receiving recess (62) extends across the entire axial length of the segment (50) so that it is axially open at both ends.

4. Assembly as claimed in any one of claims 1 to 3, **characterised in that** the receiving recess (62) is circumferentially centred relative to the two ends (60) of the segment (50), especially if this segment has only a single receiving recess (62).

5. Assembly as claimed in any one of claims 1 to 4, **characterised in that** it comprises elastic connecting elements (52), each connecting the two ends (60) of two adjacent segments (50).

6. Assembly as claimed in claim 5, **characterised in that** each segment (50) which is connected to another segment by a connecting element (52) has housings (72) for the connecting elements (52), these housings (72) being open circumferentially and radially towards the interior.

7. Assembly as claimed in any one of claims 1 to 6, **characterised in that** it comprises a radially internal chamfer (70) at the thin end, flaring axially towards the exterior.

8. Assembly as claimed in any one of the preceding claims, **characterised in that** the retaining element (16) comprises a branch (80) extending through the receiving recess (62) across the entire axial length thereof.

9. Assembly as claimed in any one of the preceding claims, **characterised in that** it further comprises a spigot end (4) inserted in the bell end (8), the spigot end (4) being locked in the bell end (8) by means of the locking ring (14).

10. Method of fitting an assembly as claimed in claim 9, **characterised by** the following successive steps:
a) introducing the locking ring (14) into the channel (32) of the bell end (8) and pre-expanding the locking ring (14) by means of the retaining element(s) (16);
b) inserting the spigot end (4) in the bell end (8) and radially spreading the locking ring (14) as the spigot end passes through;
c) withdrawing the retaining element (s) (16) causing the locking ring (14) to tighten around the spigot end again;
d) continuing to insert the spigot end (4), this end having a locking ridge (24), until this locking ridge (24) has moved past the locking ring (14); and
e) moving the spigot end (4) back until it has been moved into the locked position, the ring (14) being applied against a locking surface (42) of the bell end (8) in this position.

## Patentansprüche

1. Rohrförmige Anordnung des Typs, der umfasst:
- ein aufsteckbares Ende (8), das mit einer Kehle (32) für die Aufnahme eines Verriegelungsrings (14) versehen ist, und
- einen Verriegelungsring (14), der dazu ausgelegt ist, ein ebenes Ende (4) in dem aufsteckbaren Ende (8) zu verriegeln,
wobei der Verriegelungsring dazu ausgelegt ist, eine Verbindung zwischen zwei rohrförmigen Elementen (4, 8) des Typs, der um eine Mittelachse (X-X) verläuft, zu verriegeln, **dadurch gekennzeichnet, dass** der Verriegelungsring wenigstens zwei starre Segmente (50) umfasst, wovon jedes einen normalen Teil (58) und zwei Umfangsenden (60) besitzt, wobei jedes Segment (50) eine Form besitzt, die sich von einer dünnen axialen Seite (54) zu einer dicken axialen Seite (56) erweitert,
dass wenigstens eines der Segmente (50) wenigstens eine Aussparung (62) für die Aufnahme eines Halteorgans (16) umfasst, dass die Aufnahmeaussparung (62) auf der dünnen Seite axial offen ist, dass die Aufnahmeaussparung (62) ausschließlich in dem normalen Teil (58) verläuft, dass die Aufnahmeaussparung (62) in Umfangsrichtung durch zwei Seiten begrenzt ist und dass die Anordnung wenigstens ein Organ (16) zum Halten eines Segments (50) an dem aufsteckbaren Ende (8) entgegen einer radialen Verlagerung nach innen umfasst, wobei das Halteorgan (16) am aufsteckbaren Ende (8) eingehängt ist und sich in die Aufnahmeaussparung (62) erstreckt.

2. Anordnung nach Anspruch 1, **dadurch gekennzeichnet, dass** die Aufnahmeaussparung (62) nach innen zur Mittelachse (X-X) radial offen ist.

3. Anordnung nach Anspruch 1 oder 2, **dadurch gekennzeichnet, dass** sich die Aufnahmeaussparung (62) über die gesamte axiale Länge des Segments (50) erstreckt, so dass sie auf zwei Seiten axial offen ist.

4. Anordnung nach einem der Ansprüche 1 bis 3, **dadurch gekennzeichnet, dass** die Aufnahmeaussparung (62) in Umfangsrichtung in Bezug auf die beiden Enden (60) des Segments (50) zentriert ist, insbesondere dann, wenn dieses Segment nur eine einzige Aufnahmeaussparung (62) enthält.

5. Anordnung nach einem der Ansprüche 1 bis 4, **dadurch gekennzeichnet, dass** sie elastische Verbindungselemente (52) umfasst, die jedes der zwei Enden (60) von zwei benachbarten Segmenten (50) verbinden.

6. Anordnung nach Anspruch 5, **dadurch gekennzeichnet, dass** jedes Segment (50), das mit einem anderen Segment durch ein Verbindungselement (52) verbunden ist, Aufnahmesitze (72) für die Verbindungselemente (52) enthält, wobei diese Aufnahmesitze (72) in Umfangsrichtung und radial einwärts offen sind.

7. Anordnung nach einem der Ansprüche 1 bis 6, **dadurch gekennzeichnet, dass** sie auf der dünnen Seite radial innen eine Fase (70) aufweist, die sich axial auswärts erweitert.

8. Anordnung nach einem der vorhergehenden Ansprüche, **dadurch gekennzeichnet, dass** das Halteorgan (16) einen Schenkel (80) aufweist, der sich in der Aufnahmeaussparung (62) über deren gesamte axiale Länge erstreckt.

9. Anordnung nach einem der vorhergehenden Ansprüche, **dadurch gekennzeichnet, dass** sie außerdem ein ebenes Ende (4) umfasst, das in das aufsteckbare Ende (8) eingesetzt ist, wobei die Verriegelung des ebenen Endes (4) in dem aufsteckbaren Ende (8) über den Verriegelungsring (14) erfolgt.

10. Verfahren zum Montieren einer Anordnung nach Anspruch 9, **gekennzeichnet durch** die folgenden aufeinander folgenden Schritte:
a) Einführen des Verriegelungsrings (14) in die Kehle (32) des aufsteckbaren Endes (8) und Vorerweitem des Verriegelungsrings (14) **durch** das oder die Halteorgane (16);
b) Einführen des ebenen Endes (4) in das aufsteckbare Ende (8) und radiales Beabstanden des Verriegelungsrings (14) bei der Vorbeibewegung des ebenen Endes;
c) Zurückziehen des oder der Halteorgane (16), wodurch ein Festklemmen des Verriegelungsrings (14) um das ebene Ende erfolgt;
d) Fortsetzen des Einführens des ebenen Endes (4), wenn dieses einen Blockierwulst (24) aufweist, bis der Verriegelungsring (14) von diesem Wulst (24) freigegeben ist; und
e) Zurückziehen des ebenen Endes (4), bis es in eine verriegelte Position gebracht ist, wobei der Ring (14) in dieser Position auf die Verriegelungsoberfläche (42) des aufsteckbaren Endes (8) drückt.
